# EUROPÄISCHE PATENTANMELDUNG

(11) **EP 2 442 598 A1**
(43) Veröffentlichungstag der Anmeldung: **18.04.2012**
(21) Anmeldenummer: 10013703.3
(22) Anmeldetag: 15.10.2010
(51) Int. Cl.: H04W 8/26, H04W 12/06, H04L 29/08

(54) **Verwenden bereits aktivierter SIM-Karten zu deren Registrierung bei Erstinbetriebnahme**

(71) Anmelder: Telefónica O2 Germany GmbH & Co. oHG, 80992 München (DE)
(72) Erfinder: Pfender, Roman, 85221 Dachau (DE); Krebs, Andreas, 80634 München (DE); Jochums, Andreas, 80802 München (DE)
(74) Vertreter: Herrmann, Uwe

(57) **Zusammenfassung**

Die Anmeldung betrifft die Verwendung UMTS-Datenkarte bei der die SIM-Karte nicht vor Gebrauch derart registriert werden muss, dass die SIM-Karte einem Benutzer zugeordnet werden muss. Die aus dem Stand der Technik bekannten Telekommunikationssysteme erfordern, dass der Kunde vor Inbetriebnahme bzw. Aktivierung der SIM-Karte diese extra beim Netzanbieter registriert. Nach erfolgreicher Registrierung erfolgt die Freischaltung der SIM-Karte auf Seite des Netzanbieters. Erst danach kann sich ein Notebook mit eingesetzter SIM-Karte in das Netz des Mobilfunkanbieters einbuchen, wie beispielsweise über das Netz des Mobilfunkanbieters sich in das Internet einbuchen bzw. auf das Internet zugreifen. Dieses Problem wird gelöst indem eine Art Proxy-Server vorgesehen ist, der anhand der mit einer http-Anfrage übermittelten Daten erkennt, dass die Karte noch nicht registriert wurde bzw. der Betrag auf dem Guthaben-Konto ungenügend ist. Daraufhin wird die Anfrage an einen entsprechenden Web-Server weitergeleitet, der es dem Benutzer ermöglich einen Vertrag abzuschließen bzw. das Guthabenkonto aufzuladen. Erst danach wird die Anfrage entsprechend weitergeleitet.

## Beschreibung

Die vorliegende Erfindung betrifft ein Steuermittel, ein Telekommunikationssystem und ein Verfahren zur Registrierung eines Identifikationsmoduls.

Gattungsgemäße Telekommunikationssysteme bestehen in der Regel aus mindestens einem mobilen Endgerät, das sich über eine Funkverbindung mit dem Netz des Netzbetreibers verbindet. Der Kunde erwirbt die mobilen Endgeräte käuflich, kann diese jedoch erst nach einmaliger Anmeldung bzw. Registrierung beim jeweiligen Netzanbieter verwenden. Der Kunde muss demnach vor Ort, telefonisch oder über einen separaten Internetzugang die Registrierung bzw. Anmeldung beim Netzanbieter durchführen. Eine Anmeldung und Registrierung über das Telekommunikationsprodukt selbst, das heißt direkt über das mobile Endgerät, ist nach den bekannten Lösungen nicht möglich.

Gleiches gilt auch für die bekannten Prepaid-Vertragsbindungen, bei denen der Kunde im Voraus ein Guthaben für die Leistungen des Telekommunikationsanbieters bezahlt. Kunden, deren Guthaben für die Ausführung der Leistung des Telekommunikationsanbieters nicht ausreichend sind, können bislang nur schwierig proaktiv über ihren Guthabenstand informiert werden. Zur weiteren Benutzung ihres Telekommunikationsproduktes müssen die Kunden über zum Teil besonders aufwendige und zeitintensive Verfahren für die Aufladung ihres Prepaid-Kontos sorgen. Eine automatisierte Rückmeldung mit dem Hinweis und der Möglichkeit zur Aufladung des Kundenkontos, bei dem die Kunden keine gesonderten Maßnahmen ergreifen müssen, ist durch bestehende Telekommunikationssysteme nicht gelöst.

Es ist daher die Aufgabe der vorliegenden Erfindung, ein Steuermittel, ein Telekommunikationssystem sowie ein Verfahren der eingangs genannten Art dahingehend weiterzubilden, dass diese die oben genannten Probleme umgehen und die Nutzung der mobilen Endgeräte für die Kunden bequemer gestalten.

Diese Aufgabe wird durch ein Steuermittel gelöst, das zum Betrieb in einem Telekommunikationssystem geeignet ist bzw. darin verwendbar ist, wobei das Telekommunikationssystem wenigstens ein in dem Telekommunikationssystem betreibbares mobiles Endgerät umfasst, und wobei das Endgerät und/oder dessen Identifikationsmodul wenigstens ein Mittel zur Identifizierung und/oder Validierung und/oder Authentifizierung im Telekommunikationssystem aufweist.

Erfindungsgemäß umfasst das Steuermittel wenigstens eine Entscheidungslogik, die derart ausgeführt ist, dass eine gestellte Anfrage des mobilen Endgerätes an ein oder mehrere Zielnetze/-knoten oder ein weiteres mobiles Endgerät weitergeleitet wird, falls die Identifizierung und/oder Validierung und/oder Authentifizierung erfolgreich war oder die Anfrage des mobilen Endgerätes ausschließlich an eine Verarbeitungseinheit im Telekommunikationssystem weitergeleitet wird, falls die Identifizierung und/oder Validierung und/oder Authentifizierung fehlgeschlagen ist.

Die Anfrage wenigstens eines mobilen Endgerätes steht für jede beliebige Verwendung des mobilen Endgerätes, bei der eine Verbindung zum Netzbetreiber notwendig ist.

Die Anfrage des mobilen Endgerätes kann sich beispielsweise auf einen Sprachanruf oder auch auf eine Datenübertragung beziehen.

Dementsprechend kann das Telekommunikationssystem zur drahtlosen Datenübertragung von und/oder zu wenigstens einem mobilen Endgerät und/oder zur drahtlosen Vermittlung von Sprachanrufen von und/oder zu einem mobilen Endgerät geeignet und bestimmt sein. Das Steuermittel kann in einem solchen Telekommunikationssystem verwendet werden bzw. dessen Bestandteil bilden.

Die Übertragung der Anfrage vom mobilen Endgerät zum Steuermittel des Netzanbieters kann unmittelbar oder auch mittelbar bidirektional oder unidirektional erfolgen. Das mobile Endgerät und/oder dessen Identifikationsmodul, wie beispielweise dessen SIM-Karte, weist hierzu wenigstens ein Mittel zur eindeutigen Identifizierung und/oder Validierung und/oder Authentifizierung des mobilen Endgerätes bzw. des Kunden auf. Eine an den Netzanbieter gerichtete Anfrage beinhaltet demnach die Inanspruchnahme eines Dienstes bzw. einer Leistung mit der gleichzeitigen Übertragung der Identifikations- und/oder Validierungs- und/oder Authentifizierungsinformationen des im mobilen Endgerät angeordneten Mittels. Innerhalb des Steuermittels des Netzanbieters ist eine Entscheidungslogik implementiert, die die Anfrage in Kombination mit den übertragenen Identifizierungs- und/oder Validierungs-und/oder Authentifizierungsmerkmalen analysiert und eine Entscheidung auf Grundlage dieser Analyse trifft.

Bei erfolgreicher Identifizierung und/oder Validierung und/oder Authentifizierung des mobilen Endgerätes bzw. des Kunden bearbeitet das Steuermittel die entsprechende Anfrage, wodurch das mobile Endgerät zur Initiierung einer Datenverbindung mit dem erwünschten Zielnetz/Zielknoten/Endgerät freigegeben wird.

Schlägt die Identifizierung und/oder Validierung und/oder Authentifizierung des mobilen Endgerätes bzw. des Kunden fehl, so ist die Anfrage des mobilen Endgerätes an die Verarbeitungseinheit des Netzbetreibers zur Verarbeitung umleitbar.

Denkbar ist, dass die Verarbeitungseinheit derart ausgeführt ist, so dass die Gründe für das Fehlschlagen der Identifizierung und/oder Validierung und/oder Authentifizierung durch den Kunden des mobilen Endgerätes direkt durch die Übermittlung erforderlicher Daten vom mobilen Endgerät an die Verarbeitungseinheit behebbar sind. Als Beispiel sei die Eingabe vertragsrelevanter Daten des Kunden genannt.

Vorteilhafterweise ist das Steuermittel auf Netzanbieterseite als proxyähnliche Rechnereinheit ausgeführt. Die proxyähnliche Rechnereinheit leitet empfangene Anfragen des mobilen Endgerätes gemäß der implementierten Entscheidungslogik an das Zielnetz/-Knoten/-Gerät oder alternativ an die genannte Verarbeitungseinheit des Netzanbieters weiter.

Besonders bevorzugt ist das Mittel zur Identifizierung und/oder Validierung und/oder Authentifizierung innerhalb des mobilen Endgerätes eine nach dem Stand der Technik bekannte SIM-Karte. Hierdurch ist jedes beliebige mobile Endgerät, das ein Lesegerät für eine entsprechende SIM-Karte bietet, im Telekommunikationssystem der vorliegenden Erfindung eindeutig identifizierbar.

Denkbar ist, dass die Entscheidungslogik des Steuermittels des Netzanbieters derart ausgeführt ist, so dass die Anfrage des mobilen Endgerätes zur Bearbeitung an die Verarbeitungseinheit des Netzanbieters umleitbar ist, falls die innerhalb des mobilen Endgerätes verwendete SIM-Karte auf Netzbetreiberseite noch nicht registriert wurde, oder nicht mehr registriert ist, beispielsweise weil ein zeitlich befristeter Vertrag mit dem Kunden ausgelaufen ist, oder falls die SIM-Karte gesperrt war oder ist.

Aus dem Stand der Technik bekannte Lösungen sehen vor, dass der Kunde ein mobiles Endgerät zusammen mit einer SIM-Karte käuflich erwirbt, die SIM-Karte aber vor Inbetriebnahme des mobilen Endgerätes beim Netzanbieter registrieren muss. Erst nach der erfolgreichen Registrierung wird die Karte vom Netzanbieter aktiviert und erlaubt das freie Nutzen des mobilen Endgerätes über das Netz des Netzanbieters. Dem gegenüber bietet das erfindungsgemäße Telekommunikationssystem die Möglichkeit der Inbetriebnahme der SIM-Karte bzw. des mobilen Endgerätes auch vor erfolgter Registrierung der Karte beim Netzanbieter. Die Aktivierung der SIM-Karte erfolgt vor Verkauf des mobilen Endgerätes, wodurch eine beliebige Anfrage zur Datenübermittlung mittels des mobilen Endgerätes an das Netz des Anbieters übertragbar ist. Die Entscheidungslogik des Steuermittels erkennt die noch nicht registrierte SIM-Karte und leitet die Anfrage des mobilen Endgerätes an die besagte Verarbeitungseinheit des Telekommunikationssystems weiter.

Besonders bevorzugt ist die Verarbeitungseinheit des Telekommunikationssystems derart ausgeführt, so dass eine Erstregistrierung der SIM-Karte durchführbar ist. Die Verarbeitungseinheit erlaubt dem Kunden über das mobile Endgerät beispielsweise die Eingabe seiner persönlichen Daten bzw. vertragsrelevanter Daten, die auf Netzbetreiberseite für den ordnungsgemäßen Betrieb des Telekommunikationssystems erforderlich sind. Folglich ist eine extern durchgeführte Erstregistrierung der SIM-Karte, wie sie bei den aus dem Stand der Technik bekannten Telekommunikationssystemen erforderlich ist, nicht notwendig. Die erfindungsgemäße Lösung bietet vor allem den Vorteil, dass auch Online-Händler in der Lage sind, Telekommunikationsprodukte zu vermitteln, bei denen bisher vor Inbetriebnahme immer eine Registrierung des Kunden beim Netzanbieter notwendig war. Der zusätzliche Aufwand für den Kunden auf Grund der Produktregistrierung läßt sich folglich auf ein Minimum beschränken und ohne einen Medienbruch realisieren, was zu einer steigenden Produktakzeptanz auf Kundenseite führt.

In einem weiteren besonders bevorzugten Ausgestaltungsbeispiel der vorliegenden Erfindung ist die Entscheidungslogik innerhalb des Steuermittels des erfindungsgemäßen Telekommunikationssystems derart ausgeführt, so dass die Anfrage eines mobilen Endgerätes an die Verarbeitungseinheit umleitbar ist, falls das Guthaben des Kunden bzw. der SIM-Karte zur Vergütung der angeforderten Telekommunikationsleistung nicht ausreicht oder andere Gründe der Bearbeitung der Anfrage entgegenstehen. Dazu gehört z.B. die Sperre einer bereits registrierten SIM-Karte oder auch der Ablauf eines zeitlich befristeten Vertrages. Derartige Anwendungen sind als sogenannte Prepaid-Konten/-SIM-Karten bekannt. Der Kunde zahlt bereits im Voraus einen bestimmten Betrag an den Netzanbieter und bekommt im Gegenzug ein entsprechendes Guthaben zur Inanspruchnahme beliebiger Telekommunikationsleistungen zur Verfügung gestellt. Das erfindungsgemäße Telekommunikationssystem erlaubt es beispielsweise, den Kunden über das mobile Endgerät besonders einfach über sein aktuelles Guthaben zu informieren. Unterschreitet der Kontostand des Kunden eine definierte Grenze, ist dies durch das Steuermittel detektierbar und die Anfrage des mobilen Endgerätes ist an die Verarbeitungseinheit des Netzanbieters umleitbar.

Denkbar ist, dass die Verarbeitungseinheit des Kommunikationssystems derart ausgeführt ist, so dass eine Aufladung eines bestehenden Prepaid-Kontos durchführbar ist. Ist das Guthaben des Kunden zu gering um die angeforderten Telekommunikationsdienstleistungen des Netzbetreibers zu beanspruchen, so ist dies durch das Steuermittel detektierbar und eine entsprechende Entscheidung ist auf Grundlage der implementierten Entscheidungslogik festlegbar. Denkbar ist, dass das Steuermittel die gestellte Anfrage zur Verarbeitung an die Verarbeitungseinheit weiterleitet, welche so dann besonders bevorzugt dem Kunden eine Möglichkeit bietet, sein Guthaben direkt über das mobile Endgerät aufzuladen.

Die Anfrage des mobilen Endgerätes kann durch das Steuermittel in ein paketvermitteltes- oder IP-basiertes Netz weiterleitbar sein. Die Weiterleitung der Anfrage des mobilen Endgerätes an ein IP-basiertes Netz entspricht beispielsweise der Anbindung des mobilen Endgerätes an das Internet. Bevorzugt stellt der Kunde eine Anfrage zur Inanspruchnahme eines Internetdienstes über das mobile Endgerät. Bekannte Anfragen sind vorzugsweise das Öffnen einer HTML-Seite im Webbrowser des mobilen Endgerätes. Ist die SIM-Karte des mobilen Endgerätes nicht registriert bzw. ist das Guthaben der SIM-Karte nicht ausreichend, so ist die Anfrage des Webbrowsers durch das Steuermittel des Netzanbieters an die Verarbeitungseinheit des Netzanbieters weiterleitbar. Zweckmäßig ist, dass mittels der Verarbeitungseinheit eine Eingabemaske zur Registrierung des Kunden/SIM-Karte bzw. zur Aufladung des Kartenguthabens am mobilen Endgerät anzeigbar ist.

Gängige mobile Endgeräte zum Betrieb innerhalb des erfindungsgemäßen Telekommunikationssystems sind vorteilhafterweise Notebooks, Netbooks, Smartphones, Mobiltelefone oder dergleichen. Grundsätzlich gilt, dass der Betrieb beliebiger Endgeräte denkbar ist, die ein derartiges Mittel zur Identifizierung und/oder Validierung und/oder Authentifizierung beinhalten und die über einen Zugang zu einem Telekommunikationssystem verfügen.

In einer besonders bevorzugten Ausgestaltung der Erfindung ist das Telekommunikationssystem derart ausgeführt, dass die Verbindung zwischen mobilen Endgeräten und Netzanbieter über ein Mobilfunknetz erfolgt. Das verwendete Mobilfunknetz arbeitet hierbei bevorzugt nach den bekannten GSM-, GPRS- oder UMTS-Standards.

Die vorliegende Erfindung betrifft des Weiteren ein Telekommunikationssystem gemäß Anspruch 10, in dem wenigstens ein erfindungsgemäßes Steuermittel angeordnet ist, sowie ein Verfahren zum Betrieb eines Telekommunikationssystems mit den Merkmalen des Anspruchs 11. Vorteilhafte Weiterbildungen des Verfahrens sind Gegenstand der Unteransprüche 12 bis 15.

Wie oben ausgeführt, kann das Telekommunikationssystem zur drahtlosen Datenübertragung von und/oder zu wenigstens einem mobilen Endgerät und/oder zur drahtlosen Vermittlung von Sprachanrufen von und/oder zu einem mobilen Endgerät dienen.

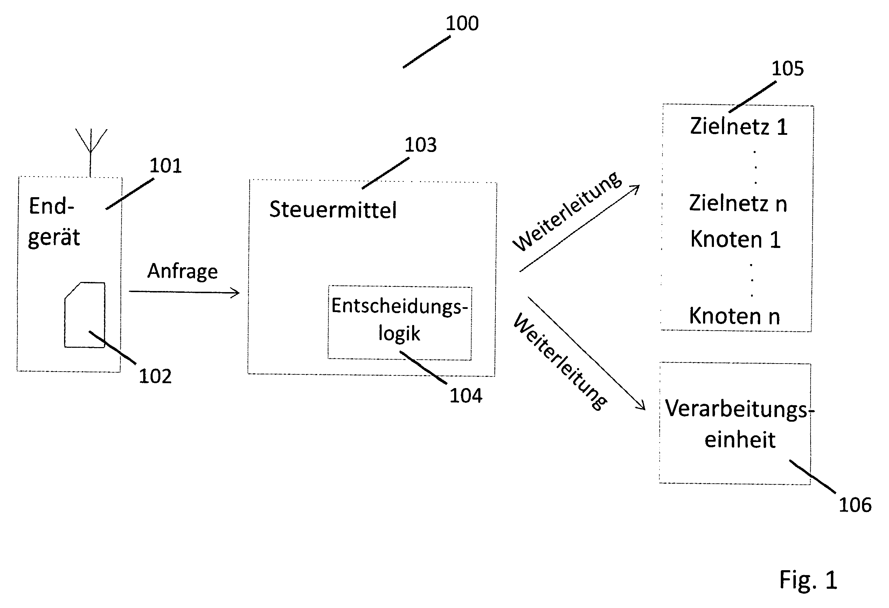

Weitere Einzelheiten und Vorteile der vorliegenden Erfindung sollen nun im Folgenden anhand eines Ausführungsbeispiels näher erläutert werden, wobei Figur 1 eine exemplarische Ausgestaltung eines erfindungsgemäßen Telekommunikationssystems zeigt.

Figur 1 zeigt ein Telekommunikationssystem 100 und ein Endgerät 101. Das Steuermittel 103 ermöglicht mit Hilfe der Entscheidungslogik 104 eine Anfrage des Endgeräts 101 entweder an ein oder mehrere Zielnetze/-Knoten 105 weiterzuleiten oder an eine vorbestimmte Verarbeitungseinheit 106. Das Bezugszeichen 102 kennzeichnet das im dem Endgerät befindliche Identifikationsmodul in Form einer SIM-Karte.

Das erfindungsgemäße Telekommunikationssystem stellt im wesentlichen ein bekanntes Mobilfunknetz eines Mobilfunkanbieters mit der dazu notwendigen Infrastruktur dar. Das Mobilfunknetz arbeitet beispielsweise nach dem Prinzip eines zellular aufgebauten Netzes auf Grundlage der bekannten Mobilfunkstandards GSM, GPRS, EDGE, UMTS, LTE usw..

Das Mobilfunknetz bietet nicht nur die Sprachübertragung von einem mobilen Endgerät zu einem oder mehreren mobilen Endgeräten an, sondern gewährt ebenso die Datenanbindung wenigstens eines mobilen Endgerätes an das Internet oder sonstige Netze bzw. Geräte.

Der Kunde erwirbt hierzu im Rahmen eines Vertragsabschlusses bzw. über ein Prepaid-Guthaben eine SIM-Karte, die sich in einem entsprechenden Notebook bzw. Netbook mit passender SIM-Kartenaufnahme einsetzen lässt. Denkbar ist auch der Vertrieb von einzelnen Notebooks bzw. Netbooks, die eine feste Integration der SIM-Karte vorsehen.

Über die SIM-Karte lässt sich das Notebook als mobiles Endgerät in dem Mobilfunknetz des Netzanbieters einbuchen um einen Datenaustausch zwischen dem Notebook und dem Internet zu gewährleisten. Die aus dem Stand der Technik bekannten Telekommunikationssysteme sehen hierzu vor, dass der Kunde vor Inbetriebnahme bzw. Aktivierung der SIM-Karte diese extra beim Netzanbieter registrieren muss. Nach erfolgreicher Registrierung erfolgt die Freischaltung der SIM-Karte auf Seite des Netzanbieters. Erst danach kann sich ein Notebook mit eingesetzter SIM-Karte in das Netz des Mobilfunkanbieters einbuchen, wie beispielsweise über das Netz des Mobilfunkanbieters sich in das Internet einbuchen bzw. auf das Internet zugreifen. Die bekannte Lösung führt jedoch zu einem erheblichen zeitlichen Versatz zwischen käuflichem Erwerb der SIM-Karte und der ersten vollfunktionsfähigen Inbetriebnahme der Karte sowie zu einer relativ geringen Inbetriebnahmequote.

Das erfindungsgemäße Kommunikationssystem sieht dem gegenüber nun vor, dass keine Registrierung der SIM-Karte vor der erstmaligen Inbetriebnahme bzw. Aktivierung der SIM-Karte bzw. des Notebooks erforderlich ist. Durch Eingabe einer URL in der Adressleiste des Notebook-Webbrowsers wird eine Anfrage an das Steuermittel des Netzanbieters gestellt. Das Steuermittel erkennt anhand der übermittelten Daten, dass die SIM-Karte des Notebooks beim Netzbetreiber noch nicht registriert ist. Die gestellte Anfrage wird an eine entsprechende Verarbeitungseinheit umgeleitet, die dem Kunden im Webbrowser seines Notebooks eine Eingabemaske zur Registrierung der SIM-Karte, d.h. zur Zuordnung der SIM-Karte zu einem Benutzer, anbietet. Beispielsweise umfaßt die Registrierung einen Vertragsabschluß, den Abschluß eines Testabos oder die Erstellung eines Prepaid-Kontos. Erst nach erfolgreich abgeschlossener Registrierung der SIM-Karte im Netz des Netzbetreibers erfolgt die Weiterleitung der gestellten Anfrage an die tatsächlich im Adressfenster des Webbrowsers eingegebene Zieladresse bzw. URL.

Ferner läßt sich der Betrieb von sogenannte Prepaid-Kunden bzw. Prepaid-SIM-Karten innerhalb des erfindungsgemäßen Telekommunikationssystems besonders einfach umsetzen. Der Kunde stellt eine Anfrage an den Netzbetreiber durch Eingabe einer URL in das Adressfenster seines Notebookbrowsers. Das Steuermittel auf Netzbetreiberseite erkennt anhand der von der SIM-Karte/Notebook übermittelten Daten das Guthaben des jeweiligen Kunden. Ist der Betrag des Guthabens auf dem Prepaid-Konto des Kunden nur ungenügend, so wird die Anfrage an die Verarbeitungseinheit des Telekommunikationssystems weitergeleitet. Dem Kunden wird eine durch die Verarbeitungseinheit generierte Meldung im Browser seines Notebooks angezeigt. Zusätzlich werden dem Kunden eine oder mehrere Maßnahmen zur Aufladung seines Guthabenkontos angeboten, welche direkt über den Browser seiner Notebooks durchführbar sind. Erst nach erfolgreicher Aufladung des Guthabenkontos wird seine tatsächlich gestellte Anfrage (Eingabe der URL) an das Internet weitergleitet und die Datenverbindung zwischen Notebook und Internet freigegeben.

Die Steuereinheit kann vorzugsweise neben unregistrierten SIM-Karten auch solche identifizieren und weiterleiten, bei denen die Testperiode abgelaufen ist, oder die sonst aus irgendeinem Grund (z.B. auf Wunsch, oder wegen Fraud) zur Nutzung gesperrt wurden.

Vorzugsweise ist des Weiteren vorgesehen, dass es ferner zukünftig möglich ist, auch die Kunden gesondert zu erkennen und weiterzuleiten, die sich in der Testperiode befinden, oder die nach Registrierung genügend Guthaben haben und die die entsprechende URL eingegeben haben.

## Patentansprüche

1. Steuermittel in einem Telekommunikationssystem eines Netzbetreibers,
wobei das Telekommunikationssystem wenigstens ein in dem Telekommunikationssystem betreibbares mobiles Endgerät umfasst, wobei das Endgerät und/oder dessen Identifikationsmodul ein Mittel zur Identifizierung und/oder Validierung und/oder Authentifizierung im Telekommunikationssystem aufweist, wobei das
Steuermittel eine Entscheidungslogik umfasst, die derart ausgeführt ist, dass eine gestellte Anfrage des mobilen Endgerätes an ein oder mehrere Zielnetze/-knoten oder ein weiteres mobiles Endgerät weitergeleitet wird, falls die Identifizierung und/oder Validierung und/oder Authentifizierung erfolgreich war oder
die Anfrage des mobilen Endgerätes ausschließlich an eine Verarbeitungseinheit im Telekommunikationssystem weitergeleitet wird, falls die Identifizierung und/oder Validierung und/oder Authentifizierung fehlgeschlagen ist.

2. Steuermittel in einem Telekommunikationssystem nach Anspruch 1, wobei das Steuermittel eine proxyähnliche Rechnereinheit ist.

3. Steuermittel in einem Telekommunikationssystem nach Anspruch 1 oder 2, wobei das Mittel zur Identifizierung/Validierung/Authentifizierung eine SIM-Karte ist.

4. Steuermittel in einem Telekommunikationssystem nach einem der vorhergehenden Ansprüche, wobei die Entscheidungslogik des Steuermittels derart ausgeführt ist, so dass die Weiterleitung der Anfrage an die Verarbeitungseinheit erfolgt, falls das mobile Endgerät bzw. das Identifikationsmodul, vorzugsweise die SIM-Karte beim Netzanbieter noch nicht registriert wurde, nicht mehr registriert ist oder gesperrt ist.

5. Steuermittel in einem Telekommunikationssystem nach einem der vorhergehenden Ansprüche, wobei die Entscheidungslogik des Steuermittels derart ausgeführt ist, so dass die Weiterleitung der Anfrage an die Verarbeitungseinheit erfolgt, falls das Guthaben des mobilen Endgerätes bzw. des Identifikationsmoduls, vorzugsweise der SIM-Karte für die Bearbeitung der Anfrage nicht ausreicht.

6. Steuermittel in einem Telekommunikationssystem nach einem der vorhergehenden Ansprüche, wobei die Verarbeitungseinheit derart ausgeführt ist, so dass eine Erstregistrierung des Identifikationsmoduls, vorzugsweise der SIM-Karte bzw. des mobilen Endgerätes durchführbar ist.

7. Steuermittel in einem Telekommunikationssystem nach einem der vorhergehenden Ansprüche, wobei die Verarbeitungseinheit derart ausgeführt ist, so dass eine Aufladung eines bestehenden Prepaid-Kontos durchführbar ist.

8. Steuermittel in einem Telekommunikationssystem nach einem der vorhergehenden Ansprüche, wobei das Steuermittel die Anfrage des mobilen Endgerätes an ein paketvermitteltes- oder IP-Netz weiterleitet.

9. Steuermittel in einem Telekommunikationssystem nach einem der vorhergehenden Ansprüche, wobei wenigstens ein mobiles Endgerät ein Notebook, Netbook, Tablet, Smartphone oder eReader ist.

10. Steuermittel in einem Telekommunikationssystem nach einem der vorhergehenden Ansprüche, wobei das Telekommunikationssystem derart ausgeführt ist, dass die Verbindung zwischen mobilem Endgerät und Netzanbieter über ein Mobilfunknetz erfolgt, wobei das Mobilfunknetz nach dem GSM-, GPRS- ,UMTS oder LTE-Standard arbeitet.

11. Telekommunikationssystem umfassend wenigstens ein Steuermittel gemäß einem der Ansprüche 1 bis 10.

12. Verfahren zum Registrieren eines Identifikationsmoduls, welches
in einem mobilen Endgerät betrieben wird, wobei das mobile Endgerät und/oder dessen Identifikationsmodul Mittel zur Identifizierung und/oder Validierung und/oder Authentifizierung in einem Telekommunikationssystem eines Netzbetreibers aufweist, das Verfahren umfassend:
Empfangen einer Anfrage des mobilen Endgerätes,
Weiterleiten der Anfrage an ein oder mehrere Zielnetze/-knoten oder ein weiteres mobiles Endgerät, falls die Identifizierung und/oder Validierung und/oder Authentifizierung erfolgreich war oder
ausschließliches Weiterleien an eine Verarbeitungseinheit im Telekommunikationsnetz, falls die Identifizierung und/oder Validierung und/oder Authentifizierung fehlgeschlagen ist.

13. Verfahren nach Anspruch 12, wobei die Weiterleitung der Anfrage an die Verarbeitungseinheit erfolgt, falls das mobile Endgerät bzw. dessen Identifikationsmodul, vorzugsweise dessen SIM-Karte beim Netzanbieter noch nicht registriert wurde, nicht mehr registriert ist oder gesperrt ist.

14. Verfahren nach Anspruch 12 oder 13, wobei die Weiterleitung der Anfrage an die Verarbeitungseinheit erfolgt, falls das Guthaben des mobilen Endgerätes bzw. des Identifikationsmoduls, vorzugsweise der SIM-Karte für die Bearbeitung der Anfrage nicht ausreicht.

15. Verfahren nach einem der Ansprüche 12 bis 14, wobei eine Erstregistrierung des mobilen Endgerätes bzw. von dessen Identifikationsmodul, vorzugsweise von dessen SIM-Karte durchgeführt wird und/der wobei eine Aufladung eines bestehenden Prepaid-Kontos durchgeführt wird.
